# EUROPÄISCHE PATENTSCHRIFT

(11) **EP 1 252 197 B1**
(45) Veröffentlichungstag und Bekanntmachung des Hinweises auf die Patenterteilung: **30.07.2003**
(21) Anmeldenummer: 00983310.4
(22) Anmeldetag: 13.12.2000
(51) Int. Cl.: C08F 2/24, C08F 251/00, C09D 133/06

(54) **VERFAHREN ZUR HERSTELLUNG VON LACKBINDEMITTELN UND DEREN VERWENDUNG IN ÜBERZUGSMITTELN**
METHOD FOR PRODUCING BINDING AGENTS FOR LACQUER AND THEIR USE IN COATING AGENTS
PROCEDE DE PRODUCTION DE LIANTS POUR PEINTURES, ET UTILISATION DE CES LIANTS DANS DES AGENTS DE RECOUVREMENT

(30) Priorität: 29.12.1999 DE 19963586
(43) Veröffentlichungstag der Anmeldung: 30.10.2002
(73) Patentinhaber: E.I. DU PONT DE NEMOURS AND COMPANY, Wilmington Delaware 19898 (US)
(72) Erfinder: FLOSBACH, Carmen, 42287 Wuppertal (DE); GLÖCKNER, Patrick, 45721 Hattern (DE); KLOSTERMANN, Peter, 42117 Wuppertal (DE); PASCHMANN, Volker, 45239 Essen (DE); RITTER, Helmut, 42111 Wuppertal (DE)
(74) Vertreter: Gille Hrabal Struck Neidlein Prop Roos
(86) Internationale Anmeldenummer: EP0012648
(87) Internationale Veröffentlichungsnummer: WO01049746

(56) Entgegenhaltungen:
- EP-A- 0 710 675
- EP-A- 0 780 401
- EP-A- 0 889 058
- DE-A- 19 533 269

## Beschreibung

Die Erfindung betrifft die Verwendung bestimmter Homo- oder Copolymerisate als Bindemittel zur Herstellung von Überzugsmitteln sowie ein Verfahren zur Herstellung von Überzugsmitteln unter Verwendung der genannten Homo- oder Copolymerisate als Bindemittel.

Bei der Herstellung von Lackbindemitteln ist die radikalische Polymerisation von Monomeren in wässrigen Lösungen ein üblicher technischer Prozess zur Herstellung polymerer Verbindungen ohne Verwendung von organischen Lösemitteln.

Bei der Emulsionspolymerisation kann es zu Schwierigkeiten kommen, wenn wasserlösliche Monomere mit wasserunlöslichen Monomeren polymerisiert werden. Im Fall von Copolymerisationen besteht insbesondere die Schwierigkeit, reine Copolymerisate zu erhalten, da die unterschiedlichen Monomeren entweder nicht miteinander copolymerisieren oder eine zu unterschiedliche Polarität aufweisen.

Gemäss DE-A-195 33 269 erfolgt die Polymerisation wasserunlöslicher Monomerer dadurch, dass diese entweder in Form von Komplexen mit Cyclodextrinen oder Cyclodextrin-Derivaten polymerisiert werden oder dass die Monomeren in Gegenwart derartiger Cyclodextrine polymerisiert werden. Die resultierenden Polymerisate liegen entweder in Form von Einschlussverbindungen vor, woraus sie isoliert werden müssen, oder sie fallen aus der wässrigen Reaktionslösung aus.

Es resultieren hydrophob modifizierte Polymerisate, die beispielsweise als Verdickungsmittel eingesetzt werden können.

In der EP-A-0 710 675 sowie EP-A-0 896 027 wird ebenfalls der Einsatz von Cyclodextrin-Derivaten bei der Polymerisation von insbesondere wasserunlöslichen Monomeren beschrieben. Die resultierenden Polymere mit geringer Wasserlöslichkeit sind beispielsweise einsetzbar als Viskositätsregler oder Additiv zur Verbesserung der Wasserbeständigkeit in entsprechenden Beschichtungszusammensetzungen.

In der genannten Literatur ist der Einsatz der erzielten Polymerisate direkt als Bindemittel für Lackformulieren nicht vorgesehen. Die beschriebenen Fälle ermöglichen lediglich den Einsatz als Additiv zur Verbesserung bestimmter Eigenschaften oder als Mittel zur Regulierung der Viskosität von Beschichtungsformulierungen.

In der DE-A-44 34 584 werden Cyclodextrinderivate in Beschichtungsmitteln als Additive zur Verhinderung von Störungen der Lackfilmeigenschaften verwendet. Dabei werden Einschlussverbindungen gebildet, welche Verunreinigungen, die insbesondere Oberflächenstörungen verursachen können, unwirksam machen. Derartige Einschlussverbindungen verursachende Cyclodextrinderivate sind direkt Bestandteil der Beschichtungsmittelzusammensetzungen und dienen nicht als Hilfsmittel zur Herstellung von Lackbindemitteln.

Aufgabe der vorliegenden Erfindung ist es, eine Verwendung bestimmter Homo- oder Copolymerisate als Bindemittel zur Herstellung von Überzugsmitteln sowie ein Verfahren zur Herstellung von Überzugsmitteln unter Verwendung der genannten Homo- oder Copolymerisate als Bindemittel bereitzustellen. Die genannten Homo- oder Copolymerisate, insbesondere auf Polyacrylatbasis, können als Lackbindemittel, insbesondere als Pulverlackbindemittel dienen, welche direkt in Lackzusammensetzungen eingesetzt werden können und einen guten Decklackstand und einen guten Verlauf erzielen.

Es hat sich gezeigt, das diese Aufgabe gelöst werden kann durch die Bereitstellung einer Verwendung von Homo- oder Copolymerisaten, die erhalten werden durch radikalische Homo- oder Copolymerisation von wasserunlöslichen ethylenisch ungesättigten Monomeren gegebenenfalls zusammen mit wasserlöslichen Monomeren, in wäßrigem Medium in Gegenwart von üblichen Polymerisationsinitiatoren bis zu einem zahlenmittleren Molekulargewicht von 1000 bis 1000000, wobei man entweder in Gegenwart von Cyclodextrin oder Cyclodextrinderivaten arbeitet und/oder zumindest die wasserunlöslichen Monomeren in der Form von Komplexen mit Cyclodextrin und/oder Cyclodextrinderivaten einsetzt, als Bindemittel zur Herstellung von Überzugsmitteln sowie eines Verfahrens zur Herstellung von Überzugsmitteln unter Verwendung der genannten Homo- oder Copolymerisate. Im folgenden werden die Homo- und Copolymerisate zur Vereinfachung auch als "Polyacrylate" bezeichnet.

Die eingesetzten Monomeren können funktionalisiert oder frei von funktionellen Gruppen sein. Die erhaltenen Polymerisate können nach dem Abtrennen direkt als Lackbindemittel eingesetzt werden. Auch die erhaltenen Polymerisatdispersionen lassen sich direkt als Bindemittel einsetzen.

Die Polymerisate können als Einschlussverbindungen mit den Cyclodextrin-Verbindungen, als pulverförmige Polymerisate oder auch in Form einer flüssigen organischen Phase nach erfolgter Polymerisation resultieren.

Im Fall der entstehenden Einschlussverbindungen können diese direkt ohne zusätzliche Behandlung als wässrige Bindemitteldispersion für Lackzusammensetzungen zum Einsatz kommen. Sie können bei geeigneter Wahl der Monomere, insbesondere durch Verwendung komplementär fünktionalisierter Monomerer, auch als Powder Slurry verwendet werden.

Im Fall der resultierenden pulverförmigen Polymerisate und der flüssigen organischen Phase der Polymerisate sind diese nach einfacher Abtrennung von der Reaktionslösung direkt als Pulver-Bindemittel bzw. als flüssiges Bindemittel einsetzbar. Nach Isolierung des erhaltenen Polymerisates kann die zurückbleibende Reaktionslösung wiederum eingesetzt werden für die Polymerisation weiterer erfindungsgemäß verwendbarer Monomere. Auf dieser Weise ist es möglich, das eingesetzte Cyclodextrin bzw. Cyclodextrinderivat mehrmals in Form eines kontinuierlichen, halbkontinuierlichen oder batchweisen Prozesses für die Synthese einzusetzen und somit eine Kostenreduzierung zu erzielen.

Vorzugsweise erfolgt die Herstellung von pulverförmigen Polyacrylat-Bindemitteln in vorgenannter Weise. Dabei weisen die Pulver vorzugsweise eine Glasübergangstemperatur Tg≥ 25 °C auf.

Durch das Verfahren unter Verwendung von Cyclodextrin bzw. vom Cyclodextrin-Derivaten ist es in überraschender Weise möglich, einheitliche Homo- und/oder Copolymerisate der gewünschten Zusammensetzung mit einem gezielten zahlenmittleren Molekulargewicht Mn in einem weiten Bereich von 1000 bis 1000000, bevorzugt 1000 bis 100000; besonders bevorzugt 1000 bis 10000 zu erhalten, die direkt als Lackbindemittel verwendbar sind.

Die nach dem Verfahren resultierenden Homo- und/oder Copolymerisate sind insbesondere einsetzbar für die Formulierung von Pulverlackzusammensetzungen unter Verwendung der erfindungsgemäß resultierenden Polymerisate mit einem zahlenmittleren Molekulargewicht Mn im Bereich von 1000 bis 10⁵, bevorzugt 1000 bis 10⁴.

Die wasserunlöslichen Monomere sind erfindungsgemäß höchstens bis zu 20 g/l bei 20 °C wasserlösliche ethylenisch ungesättigte Monomere. Beispiele fiir solche Verbindungen sind Styrol, α-Methylstyrol, C₂-C₄₀-Alkylester der Acrylsäure oder C₁- bis C₄₀-Alkylester der Methacrylsäure, wie Methylmethacrylat, Ethylacrylat, Propylmethacrylat, Isopropylacrylat, n-Butylmethacrylat, Isobutylacrylat, tert.-Butylmethacrylat, Pentylmethacrylat, n-Hexylmethacrylat, n-Heptylmethacrylat, n-Octylacrylat, 2-Ethylhexylacrylat, Decylmethacrylat, Laurylmethacrylat,

Palmitylmethacrylat, Phenoxyethylmethacrylat, Phenylmethacrylat, Cyclohexylmethacrylat, tert.-Butylcyclohexylacrylat, Butylcyclohexylmethacrylat, Trimethylcyclohexylmethacrylat.

Weitere Beispiele von Monomeren dieser Gruppe sind glycidylfunktionalisierte Monomere, wie z. B. Glycidyl(meth)acrylat, 1,2-Epoxybutyl(meth)acrylat oder 2,3-Epoxycyclopentyl(meth)acrylat. Weitere copolymerisierbare Glycidylmonomere sind z. B. (Meth)allylglycidylether oder 3,4-Epoxy-1-vinylcyclohexan.

Hydroxyalkylester, α,β-ungesättigter Carbonsäuren wie der Acrylsäure und/oder Methacrylsäure mit einer primären OH-Gruppe und einem C₅-C₁₈-Hydroxyalkylrest gehören ebenfalls zu dieser Gruppe, wie z. B. Hydroxyhexylacrylat, Hydroxyoctylacrylat und die entsprechenden Methacrylate und Umsetzungsprodukte von Hydroxyethyl(meth)acrylat mit Caprolacton, sowie Monomere mit sekundären OH-Funktionen, wie Addukte aus Glycidyl(meth)acrylat und gesättigten kurzkettigen Säuren mit C₁-C₃-Alkylresten, z. B. Essigsäure oder Propionsäure, Umsetzungsprodukte aus Glycidyl(meth)acrylat mit gesättigten verzweigten oder unverzweigten Fettsäuren mit C₄-C₂₀-Alkylresten, z. B. Butansäure, Laurinsäure, Stearinsäure, sowie Addukte aus Glycidylestern stark verzweigter Monocarbonsäuren (Glycidylester der Versaticsäure ist unter dem Handelsnamen Cardura E erhältlich) mit ungesättigten COOH-funktionellen Verbindungen wie z. B. Acryl- bzw. Methacrylsäure, Maleinsäure, Addukte aus Cardura E mit ungesättigten Anhydriden wie z. B. Maleinsäureanhydrid. Die Umsetzung der Acrylsäure oder Methacrylsäure mit dem Glycidylester einer Carbonsäure mit einem tertiären α-Kohlenstoff kann vor, während oder nach der Polymerisationsreaktion erfolgen.

Weitere Beispiele für die genannten Monomeren sind N-alkylsubstituierte Acrylamide und Methacrylamide, wie N-tert-Butylacrylamid, N-Octylacrylamid, N-Hexadecylmethacrylamid, N-Methacrylamidocapronsäure, N,N-Dibutylacrylamid.

Andere verwendbare Monomere sind Vinylalkylether mit 1 bis 40 Kohlenstoffatomen im Alkylrest, beispielsweise Methylvinylether, n-Propylvinylether, Isobutylvinylether, 2-Ethylhexylvinylether, Octadecylvinylether, 2-(Diethylamino)ethylvinylether sowie die entsprechenden Allylether wie Allylethylether, Allyl-n-propylether und Allyl-2-ethylhexylether. Ausserdem eignen sich Ester der Maleinsäure und Fumarsäure, die sich von einwertigen Alkoholen mit 1 bis 22 Kohlenstoffatomen ableiten, beispielsweise Maleinsäuremono-n-butylester, Maleinsäuremonodecylester, Maleinsäuredidodecylester sowie Vinylester von gesättigten C₃- bis C₄₀-Carbonsäuren wie Vinylpropionat, Vinyl-2-ethylhexanoat, Vinylstearat und Vinyllaurat. Andere Monomere sind Methacrylnitril, Vinylidenchlorid, Isopren.

Die oben genannten wasserunlöslichen Monomeren können allein oder in Mischung zur Herstellung der Komplexe oder bei der Polymerisation eingesetzt werden. Bevorzugt in Betracht kommende Verbindungen sind C₂- bis C₃₀-Alkylester der Acrylsäure, C₂- bis C₃₀-Alkylester der Methacrylsäure, C₁- bis C₂₀-Alkylvinylether, Styrol, alpha -Methylstyrol. Besonders bevorzugte Monomere sind Methylmethacrylat, Butylacrylat, Laurylacrylat, Stearylacrylat, alicyclisch substituierte Acrylate und Methacrylate, Styrol, α-Methylstyrol, Glycidyl(meth)acrylat, Methylvinylether, Ethylvinylether, Octadecylvinylether oder deren Mischungen.

Geeignete erfindungsgemäß einsetzbare wasserlösliche Monomere sind beispielsweise monoethylenisch ungesättigte C₃-C₅-Carbonsäuren, deren Monoester mit C₂-C₄-Diolen, deren Ester mit oligomeren Ethylenoxideinheiten, die aus mindestens zwei Einheiten Ethylenoxid bestehen, deren Amide und Ester mit Aminoalkoholen der Formel 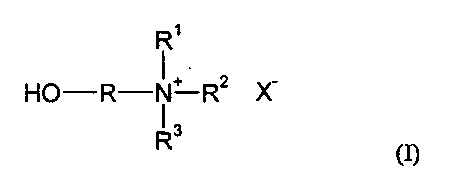 in der R = C₂- bis C₅-Alkylen, R₁, R₂, R₃ = CH₃, C₂H₅ C₃H₇ und X⁻ ein Anion bedeutet. Geeignet sind außerdem Amide, die sich von Aminen der Formel 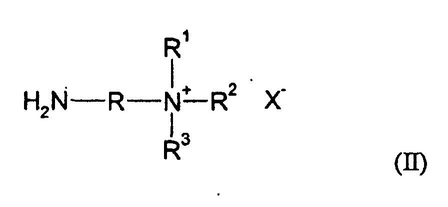 ableiten. Die Substituenten in Formel II und X⁻ haben die gleiche Bedeutung wie in Formel I.

Bei diesen Verbindungen handelt es sich beispielsweise um Acrylsäure und Methacrylat, Itaconsäure, Maleinsäure, Hydroxyethylmethacrylat, Butandiolmonoacrylat, Acrylamid, Crotonsäureamid, Dimethylaminoethylacrylat, Dimethylaminoethylmetharylat, Dimethylaminopropylmethacrylat, N-Isobutyhnethacrylat, Dimethylaminoneopentylmethacrylat. Weiterhin gehört beispielsweise Phenoxyethylacrylat zu dieser Gruppe. Die basischen Acrylate und Methacrylate bzw. basischen Amide, die sich von den Verbindungen der Formel II ableiten, werden in Form der Salze mit starken Mineralsäuren, Sulfonsäuren oder Carbonsäuren oder in quaternisierter Form eingesetzt. Das Anion X⁻ für die Verbindungen der Formel I ist der Säurerest der Mineralsäuren bzw. der Carbonsäuren oder Methosulfat, Ethosulfat oder Halogenid aus einem Quaternierungsmittel.

Weitere einsetzbare wasserlösliche Monomere sind N-Vinylpyrrolidon, N-Arylamidopropansulfonsäure, Vinylphosphonsäure und/oder Alkali- bzw. Ammoniumsalze der Vinylsulfonsäure. Diese können ebenfalls entweder in nicht neutralisierter Form oder in partiell bzw. bis zu 100% neutralisierter Form bei der Polymerisation eingesetzt werden. Als wasserlösliche Monomere eignen sich auch Diallylammoniumverbindungen, Diethyldiallylammoniumchlorid, N-Vinylimidazoliumverbindungen, wie Salze oder Quatemisierungsprodukte von N-Vinylimidazol und 1-Vinyl-2-methylimidazol und N-Vinylimidazoline, wie N-Vinylimidazolin, 1-Vinyl-2-methylimidazolin, die ebenfalls in quaternisierter Form oder als Salz bei der Polymerisation eingesetzt werden.

Bevorzugt einsetzbare wasserlösliche Monomere sind monoethylenisch ungesättigte C₃-C₅-Carbonsäuren, Vinylsulfonsäure, Acrylamidomethylpropansulfonsäure, Vinylphosphonsäure, N-Vinylformamid, Dimethylaminoethyl(meth)acrylat, Dimethylpropyl(meth)acrylamide, Hydroxyethyl(meth)acrylat, Hydroxypropyl(meth)acrylat, Alkali- oder Ammoniumsalze der genannten Säuregruppen enthaltenden Monomeren oder Mischungen der Monomeren untereinander. Von besonderer wirtschaftlicher Bedeutung ist der Einsatz von Acrylsäure oder Mischungen aus Acrylsäure und Maleinsäure oder deren Alkalisalze bei der Herstellung von hydrophob modifizierten wasserlöslichen Copolymerisaten.

Alle genannten Monomere können jeweils allein oder in Mischung untereinander radikalisch polymerisiert werden.

Insbesondere durch Verwendung komplementärer Monomerer können nach erfolgter Polymerisation auch reaktive Powder Slurries resultieren. Komplementäre Monomere sind im allgemeinen Monomere, die über ihre funktionellen Gruppen miteinander eine Additions- oder Kondensationsreaktion eingehen können, z. B. Glycidylmethacrylat, Butandiolmonoacrylat, (Meth)acrylsäure.

Neben den genannten erfindungsgemäßen Monomeren sind geringe Mengen weiterer Monomere verwendbar, beispielsweise Monomere mit mindestens 2 polymerisierbaren olefinisch ungesättigten Doppelbindungen, z. B. Hexandioldi(meth)acrylat, Ethylenglykoldi(meth)acrylat, Hexamethylenbis(meth)acrylamid, Divinylbenzol.

Diese Monomere können allein oder in Mischung in einer Menge von 0 bis 5 Gew.-%, bezogen auf Gesamtmonomere, zum Einsatz kommen.

Als Cyclodextrine können Alpha-, Beta-, Gamma-, und Delta-Cyclodextrine eingesetzt werden. Diese sind bekannt und bestehen aus 6 bis 9 D-Glycoseeinheiten, welche über eine Alpha-1,4-glycosidische Bindung miteinander verbunden sind. Cyclodexrin-Derivate sind Verbindungen, welche beispielsweise Umsetzungsprodukte von Cyclodextrinen mit reaktiven Verbindungen darstellen, z. B. Umsetzungsprodukte von Cyclodextrinen mit Alkenoxiden wie z. B. Ethylenoxid, Propylenoxid, Butylenoxid oder Styroloxid, Umsetzungsprodukte von Cyclodextrinen mit Alkylierungsmitteln, z. B. C₁ bis C₂₂ Alkylhalogenide, beispielsweise Methylchlorid, Ethylchlorid, Butylchlorid, Laurylchlorid, Stearylchlorid. Desweiteren ist auch der Einsatz von Cyclodextrin-Derivaten auf der Basis der Umsetzung von Cyclodextrin mit Chloressigsäure sowie der enzymatischen Verknüpfung mit Maltose-Oligomeren möglich, z. B. Dimethyl-Beta-Cyclodextrin, Sulfonatopropylhydroxypropyl-Beta-Cylcodextrin.

Vorzugsweise werden verwendet Alpha, Beta, Gamma-Cyclodextrin, 2,6-Dimethyl-Beta-Cyclodextrin.

Erfindungsgemäß kann die Polymerisaten der genannten Monomere in Gegenwart der Cyclodextrine bzw. der Cyclodextrin-Derivate erfolgen oder durch vorherige Komplexbildung der Monomere mit dem Cyclodextrin bzw. den Cyclodextrin-Derivaten.

Die Polymerisation der erfindungsgemäß einsetzbaren Monomere in Gegenwart der Cyclodextrine und/oder Cyclodextrinderivate kann so erfolgen, dass auf ein Mol der genannten erfindungsgemäß eingesetzten Monomere bis zu 5 Mol an Cyclodextrinen und/oder Cyclodextrin-Derivaten zum Einsatz kommen. Im Fall des Einsatzes von Komplexen werden die erfindungsgemäß genannten Monomeren mit den Cyclodextrinen und/oder Cyclodextrinstrukturen im Molverhältnis von 1 : 10 bis 2 : 1 verwendet.

Die Komplexe sind nach üblichen Methoden des Standes der Technik herstellbar. Beispielsweise kann das Cyclodextrin mit mindestens einem Monomer in einem Lösemittel gelöst werden, wobei nach Entfernung des Lösemittels ein kristalliner Komplex resultiert.

Desweiteren können für die Komponenten Lösemittel verwendet werden, in denen nur jeweils eine Komponente lösbar ist und die anderen durch mechanische/thermische Massnahmen eingearbeitet werden. Es kann auch völlig lösemittelfrei gearbeitet werden. Die Bildung der Komplexe kann bei Normaldruck, unter vermindertem Druck oder auch unter erhöhtem Druck vorgenommen werden.

Vorzugsweise erfolgt die Komplexbildung durch Vorlage des Cyclodextrins bzw.

Cyclodexrinderivates in Wasser und Einarbeiten des jeweiligen erfindungsgemäß eingesetzten Monomers in diese wässrige Lösung bzw. Emulsion. Das Molverhältnis aus Monomer und Cyclodextrin beträgt vorzugsweise 1 : 5 bis 1 : 1.

Die Polymerisation erfolgt in bekannter Art und Weise durch Lösungs- oder Fällungspolymerisation in wässrigem Medium, insbesondere in Wasser. Unter wässrigem Medium können auch Mischungen von Wasser mit wassermischbaren organischen Flüssigkeiten, wie beispielsweise Glykole, Essigsäureester von Glykol, Alkohole, Aceton, Tetrahydroforan, Methylpyrrolidon oder Mischungen der genannten Lösemittel verstanden werden. Vorzugsweise wird die Polymerisation in Wässer durchgeführt.

Die Polymerisation kann beispielsweise unter Sauerstoffausschluss, gegebenenfalls unter Druck, beispielsweise bei Temperaturen von 10 bis 200 °C, vorzugsweise 20 bis 140 °C diskontinuierlich oder kontinuierlich durchgeführt werden.

Als Polymerisationsinitiatoren sind die üblichen Initiatoren einsetzbar, beispielsweise anorganische und organische Peroxyde, Hydroperoxyde, Percarbonate, Azoverbindungen.

Es können auch die bekannten Redoxkatalysatoren zugesetzt werden, beispielsweise Salze von Übergangsmetallen, reduzierend wirkende Schwefelverbindungen oder reduzierend wirkende Phosphorverbindungen.

Desweiteren können auch die bei Polymerisationen üblichen Regler zugesetzt werden, beispielsweise in Mengen von 0 bis 20 Gew.-% bezogen auf die zu polymerisierenden Monomeren, beispielsweise Cysteine, Mercapto- bzw. Thiolverbindungen, die eine homolytisch spaltbare S-H-Gruppierung tragen, z. B. N-Acetyl-L-Cystein, 2-Mercaptoethanol, Mercaptoalkohole, Cl-C20-Alkylmercaptone. Weiterhin sind als Regler einsetzbar Salze des Hydrazins, Aldehyde, Ameisensäure, Ammoniumformiat, Hydroxylammoniumsulfat.

Erfindungsgemäß können die Monomere in einer wässrigen Lösung von Cyclodextrinen und/oder Cyclodextrin-Derivaten vorgelegt und in Gegenwart von Polymerisationsinitiatoren und gegebenenfalls -reglern polymerisiert werden.

Darüber hinaus ist es auch möglich, die Monomere teilweise oder vollständig während der Polymerisation gleichmässig in das Reaktionsgefäss kontinuierlich und/oder halbkontinuierlich der wässrigen Lösung von Cyclodextrinen und/oder Cyclodextrin-Derivaten zuzugeben, gegebenenfalls gemeinsam mit den Initiatoren und gegebenenfalls weiteren Additiven, und zu polymerisieren.

Beispielsweise kann das Verfahren so erfolgen, dass zunächst das Cyclodextrin in Wasser gelöst wird und anschliessend die erfindungsgemäß einsetzbaren Monomere in diese Lösung dispergiert werden. Dies kann gegebenenfalls in einem Ultraschallbad geschehen. Die Dispergierung erfolgt gegebenenfalls solange, bis eine klare Phase erhalten wird. Danach wird der Initiator zugesetzt und die Polymerisation beginnt. Gegebenenfalls erfolgt die Polymerisation in Anwesenheit von sogenannten Polymerisationsreglern. Die gebildeten Homo- und/oder Copolymerisate können nach Abkühlung der Reaktionslösung erfindungsgemäß aus der wässrigen Reaktionslösung in Form eines Pulvers oder in Form einer organischen Phase anfallen. Darüber hinaus können sie auch als stabile wässrige Dispersion resultieren.

Im Fall pulverförmiger Polymerisate werden diese filtriert und gewaschen und es resultiert ein Polymer, welches direkt als pulverförmiges Bindemittel für Lackzusammensetzungen zur Verfügung steht.

Nach Isolierung der pulverförmigen Polymerisate bzw. der organischen Phase der Polymerisate enthält die zurückbleibende Reaktionslösung fast vollständig das eingesetzte Cyclodextrin bzw. Cyclodextrin-Derivat und kann somit für weitere Synthesen dieser Art eingesetzt werden, indem in die Reaktionslösung wiederum entsprechende erfindungsgemäße Monomer eindispergiert werden und die Polymerisation gestartet wird.

Durch das Verfahren wird die Herstellung von Homo- und Copolymerisaten, insbesondere die Herstellung einheitlicher Copolymerisate, mit einer weiten Molekulargewichtsregelung aus den genannten Monomeren ermöglicht im Rahmen eines einfachen und eleganten Verfahrens ohne die bei üblichen Polymerisationsmethoden vorhandene Temperaturbelastung und aufwendige Verfahrensweise.

Insbesondere die Möglichkeit der Abtrennung des resultierenden Polymerisates und die Wiederverwendung der zurückbleibenden Reaktionslösung für eine erneute Synthese ermöglicht eine einfache und kostengünstige Verfahrensführung.

Mit dem Verfahren gelingt es, die resultierenden Polymerisate direkt entweder als Pulver, als organische Phase oder als wässrige Dispersion in kontinuierlicher oder halbkontinuierlicher Weise als Lackbindemittel zu gewinnen, ohne das die bisherigen Arbeits- und energieintensiven Aufarbeitungsschritte der üblichen Polymerisationsmethodik benötigt werden, wie beispielsweise Destillation, Destillatvernichtung, Konfektionierung in entsprechenden Kühlaggregaten usw.

Die erhaltenen Bindemittel sind zu Lackzusammensetzungen verarbeitbar, ohne besondere Verarbeitungsschritte vornehmen zu müssen. Bevorzugt ist der Einsatz der pulverförmigen Polymerisate als Bindemittel in Pulverlackzusammensetzungen möglich. Die resultierenden Lackzusammensetzungen ermöglichen die Erzielung einer guten Vernetzbarkeit bei gutem Decklackstand und Verlauf.

Die Erfindung betrifft somit die Verwendung der hergestellten Homo- und Copolymere als Lackbindemittel in Überzugsmitteln. Zur Herstellung der Überzugsmittel können die hergestellten Bindemittel in üblicher Weise formuliert werden. Beispielsweise können Vernetzer zugesetzt werden, die in üblicher Weise funktionelle Gruppen tragen, die zu gegebenenfalls in den Bindemitteln enthaltenen funktionellen Gruppen komplementär sind. Es können in Überzugsmitteln übliche Komponenten, wie anorganische oder organische Pigmente, Füllstoffe und/oder Additive, wie Verlaufsmittel, Entgasungsmittel und/oder Beschleuniger eingearbeitet werden.

### Beispiel 1

### Herstellung eines Komplexes mit Cyclodextrin und Homopolymerisation Komplex I

266,3 g (200,0 mMol) teilmethyliertes β-Cyclodextrin (me-β-CD) wurden in 642 g Wasser gelöst und 32,0 g (153,6 mMol) Isobornylacrylat zugegeben. Die gut geschüttelte, gelbliche O/W-Suspension wurde 20 min. im Ultraschallbad belassen, worauf eine klare, gelbliche Lösung des komplexierten Monomers als 1 : 1-Komplex entstand.

Die hergestellte Lösung kann direkt für eine Polymerisation verwendet werden; die Ausbeute ist demnach quantitativ.

### Komplexe II-X

Analog zur Herstellung des Komplexes I wurden Komplexe von in Tabelle 1 angegebenen Monomeren mit me-β-CD im Molverhältnis 1 : 1 hergestellt.

**Tabelle 1**

| Komplex | Monomer |
|---|---|
| II | Butylacrylat |
| III | Butylmethacrylat |
| IV | Cyclohexylmethacrylat |
| V | Glycidylmethacrylat |
| VI | Hydroxyethylacrylat |
| VII | Hydroxyethylmethacrylat |
| VIII | Isobornylmethacrylat |
| IX | Methylmethacrylat |
| X | Styrol |

### Homopolymerisation von Komplex I

Zu 100 g der wäßrigen Lösung des Komplexes I aus Isobornylacrylat und me-β-CD wurden 0,2 g Kaliumperoxodisulfat (K₂S₂O₈) und 0,1 g Natriumhydrogensulfit (NaH-SO₃) gegeben. Unter Sauerstoffausschluß wurde die Lösung bei Raumtemperatur polymerisiert. Nach etwa 3 min. bildete sich eine erste Trübung, die auf das ausgefallene, wasserunlösliche Homopolymerisat zurückzuführen ist. Nach 12 h wurde das entstandene Polymerisat von der wäßrigen Lösung abgetrennt und getrocknet. Das Polymer wurde in einer Ausbeute von 93 %, frei von me-β-CD erhalten.

### Beispiele 2 bis 10

### Homopolymerisation der Kompiexe II bis X

Homopolymerisate der Komplexe II bis X wurden in Analogie zu Beispiel 1 hergestellt. Die Ausbeuten sind in Tabelle 2 angegeben.

**Tabelle 2**

| Beispiel | Komplex | Ausbeute [%] |
|---|---|---|
| 2 | II | 89 |
| 3 | III | 94 |
| 4 | IV | 91 |
| 5 | V | 90 |
| 6 | VI | 84 |
| 7 | VII | 79 |
| 8 | VIII | 92 |
| 9 | IX | 90 |
| 10 | X | 93 |

### Beispiel 11

### Copolymerisation von Komplex I mit Komplex II (1 : 1 molar)

5,88 g Komplex-1-Lösung und 5,80 g Komplex-II-Lösung wurden unter Rühren unter Sauerstoffausschluß auf 85°C geheizt und 0,025 g 2,2'-Azobis(2-amidinopropan)dihydrochlorid (AAP) zugegeben. Nach 4 h wurde die Polymerisation durch Kühlung und Zugabe von 15 ml Wasser beendet. Der bereits während der Reaktion ausgefallene Feststoff wurde von der Mutterlauge abgetrennt, in 2 ml THF aufgenommen und aus 50 ml Wasser gefällt, wodurch ein farbloses Polymer erhalten wurde. Die Ausbeute betrug 88 %.

### Beispiele 12 bis 15

### Copolymerisation der weiteren Komplexe

Copolymerisate der in der nachfolgenden Tabelle gezeigten Komplexe wurden in Analogie zu Beispiel 11 hergestellt. Die Ausbeuten sind in Tabelle 3 angegeben.

**Tabelle 3**

| Beispiel | Komplex | Ausbeute [%] |
|---|---|---|
| 12 | II/X | 89 |
| 13 | III/V | 94 |
| 14 | III/X | 91 |
| 15 | IX/X | 90 |

### Beispiel 16

### Copolymerisation von wasserlöslichen Monomeren mit CD-komplexierten Monomeren

N-Isopropylacrylamid zu Komplex X : molares Verhältnis 9 : 1

Zu 1,0 g N-Isopropylacrylamid und 1,31 g me-β-CD, gelöst in 30 ml Wasser, wurden 0,1 g Styrol gegeben. Nach der Komplexierung durch Ultraschallbehandlung wurde mit Stickstoff gespült und 0,13 g Kaliumperoxodisulfat sowie 0,055 g Natriumhydrogensulfit im Stickstoffgegenstrom zugesetzt, dann 10 h unter Rühren polymerisiert. Der schon trübe Ansatz wurde auf ca. 50°C erwärmt, das ausgefallene Polymer warm filtriert und mit heißem Wasser gut gewaschen.

### Beispiele 17 bis 22

### Copolymerisation von wasserlöslichem Monomer mit weiteren Komplexen

Copolymerisate der in Tabelle 4 gezeigten Komplexe mit N-lsopropylacrylamid wurden in Analogie zu Beispiel 16 hergestellt. Die Ausbeuten sind in dieser Tabelle angegeben.

**Tabelle 4**

| Beispiel | Komplex | Ausbeute [%] | | | |
|---|---|---|---|---|---|
| | | 9:1 | 4:1 | 2:1 | 1 : 1 |
| 18 | X | 87 | 79 | 80 | 84 |
| 19 | I | 88 | 85 | | |
| 20 | VIII | 79 | 82 | | |
| 21 | III | 67 | 73 | | |
| 22 | IV | 73 | 71 | | |

### Beispiel 23

### Einfluß von Reglern auf den Polymerisationsgrad der Komplexe

12,8 g me-β-CD wurden in 30 ml Wasser gelöst und 1,0 g Styrol zugesetzt. Nach Schütteln und Ultraschallbehandlung für 15 min. resultierte eine klare, gelbliche Lösung von Komplex X. Zu dieser Lösung wurden 0,31 g Kaliumperoxodisulfat und 0,12 g Natriunmhydrogensulfit sowie 0,20 g N-Acetyl-L-cystein gegeben. Der Ansatz wurde für 16,5 h unter Sauerstoffausschluß gerührt. Dann wurde das ausgefallene Polymer abgesaugt, mit Wasser gewaschen und getrocknet.

In gleicher Weise wurde eine Reaktion, die kein N-Acetyl-L-cystein enthielt, durchgeführt. Durch die Anwendung von Reglermolekülen kann das mittlere Molekulargewicht drastisch beeinflußt werden.

### Mittlere Molekulargewichte der hergestellten Polymere Xb (mit Regler), Xc (ohne Regler)

**Tabelle 5**

| | M_{w} g • mol⁻¹ | Mₙ g • mol⁻¹ | D |
|---|---|---|---|
| Xb | 11600 | 1900 | 6,3 |
| Xc | 158000 | 3300 | 48,2 |

### Beispiele 24 bis 30

Polymere der in Tabelle 6 gezeigten Komplexe wurden in Analogie zu Beispiel 23 hergestellt.

**Tabelle 6**

| Beispiel | Komplex | Monomer |
|---|---|---|
| 24 | II | Butylacrylat |
| 25 | III | Butylmethacrylat |
| 26 | IV | Cyclohexylmethacrylat |
| 27 | V | Glycidylmethacrylat |
| 28 | VI | Hydroxyethylacrylat |
| 29 | VII | Hydroxyethylmethacrylat |
| 30 | IX | Methylmethacrylat |

Neben der Anwendung von N-Acetyl-L-cystein als Regler, eignen sich alle weiteren Mercaptoverbindungen, die eine homolytisch spaltbare S-H-Gruppierung tragen. Dieses sind z.B. N-Acetyl-L-cysteinmethylester, Cystein, 2-Mercaptoethanol, Dodecylmercaptan.

### Synthese eines Polymerisates unter Verwendung von me-β-CD im Kreisprozeß

364.1 g me-β-CD wurden in 922,0 g Wasser gelöst und 10,64 g Glycidylmethacrylat, 3,37 g Styrol, 7,03 g Butylmethacrylat sowie 8,95 g Methylmethacrylat zugesetzt. Das Gemisch wurde geschüttelt und die entstandene Dispersion mit Ultraschall behandelt. Nach etwa 20 min. Ultraschall wurde eine gelbliche, klare Lösung erhalten. Unter Rühren unter Sauerstoffausschluß wurde auf 80°C geheizt, 5,34 g Kaliumperoxodisulfat zugesetzt und die Reaktion bei 80 bis 85°C über 6 h durchgeführt. Sodann wurde gekühlt und das während der Reaktion ausgefallene Polymer von der Mutterlauge getrennt. Das Polymer wurde zweimal in jeweils 400 ml Wasser suspendiert und erneut abfiltriert. Das erste Waschwasser besaß einen Festkörpergehalt von etwa 7 %. Hierbei handelte es sich in der Hauptsache um me-β-CD. Das zweite Waschwasser war weitestgehend frei von me-β-CD; dessen Festkörpergehalt lag unterhalb 1 %. Das erhaltene farblose Polymer wurde vom Wasser befreit. Die Ausbeute betrug 85 %.

Zu der erhaltenen Mutterlauge wurden die in Tabelle 7 aufgeführten Monomere gegeben (Ansatz 2). Die weitere Verfahrensweise entsprach der ersten Reaktionsführung. Insgesamt wurden fünf Ansätze mit der Mutterlauge der jeweils vorherigen Reaktion durchgeführt. Die Menge Mutterlauge nimmt mit jedem Reaktionsansatz ab, da keine ganz vollständige Befreiung des Polymers vom Lösemittel möglich ist. Um eine genügend große Ansatzmenge zu gewährleisten, wurden aus diesem Grund zu dem vierten Ansatz 45 g me-β-CD sowie 105 g Wasser gegeben.

**Tabelle 7**

| | Einwaage Ansatz 2 | Einwaage Ansatz 3 | Einwaage Ansatz 4¹⁾ | Einwaage Ansatz 5 |
|---|---|---|---|---|
| Glycidylmethacrylat | 9,40 g | 8,40 g | 9,16 g | 7,59 g |
| Styrol | 2,98 g | 2,65 g | 2,90 g | 2,41 g |
| Butylmethacrylat | 6,21 g | 5,54 g | 6,05 g | 5,01 g |
| Methylmethacrylat | 7,90 g | 7,05 g | 7,70 g | 6,38 g |
| K₂S₂O₈ | 4,72 g | 4,21 g | 4,59 g | 3,81 g |
| Mutterlauge | 1286 g | 1147 g | 1253 g¹⁾ | 1038 g |
| Ausbeute | 83 % | 80% | 85% | 89 % |

| | | | | |
|---|---|---|---|---|
| ¹⁾ zu der Mutterlauge wurden 45 g me-β-CD sowie 105 g Wasser gegeben. | | | | |

## Patentansprüche

1. Verwendung von Homo- oder Copolymerisoten, die erhalten werden durch radikalische Homo- oder Copolymerisation von wasserunlöslichen ethylenisch ungesättigten Monomeren gegebenenfalls zusammen mit wasserlöslichen Monomeren, in wäßrigem Medium in Gegenwart von üblichen Polymerisationsinitiatoren bis zu einem zahlenmittleren Molekulargewicht von 1000 bis 1000000, wobei man entweder in Gegenwart von Cyclodextrin oder Cyclodextrinderivaten arbeitet und/oder zumindest die wasserunlöslichen Monomeren in der Form von Komplexen mit Cyclodextrin und/oder Cyclodextrinderivaten einsetzt, als Bindemittel zur Herstellung von Überzugsmitteln.

2. Verwendung nach Anspruch 1, worin die wasserunlöslichen Monomere ausgewählt werden aus glycldylfunktionalisierten Monomeren, Hydroxyalkylestern α,β-ungesättigter Carbonsäuren, Umsetzungsprodukten von Hydroxyethyl(meth)acrylat mit Caprolacton und Monomeren mit sekundären OH-Funktionen.

3. Verwendung nach Anspruch 1 oder 2, **dadurch gekennzeichnet, daß** die Homo- und/oder Copolymerisate in der Form von Pulvern oder wäßrigen Pulveraufschlämmungen gewonnen werden.

4. Verwendung nach einem der Ansprüche 1 bis 3, **dadurch gekennzeichnet, daß** die erhaltenen Homo- oder Copolymerisate abgetrennt und die verbleibende wäßrige Phase erneut in das Verfahren zurückgeführt wird.

5. Verwendung nach einem der Ansprüche 1 bis 4, **dadurch gekennzeichnet, daß** die hergestellten Homo- oder Copolymerisate direkt als Bindemittel in Überzugsmittel eingearbeitet werden.

6. Verwendung nach einem der Ansprüche 1 bis 4, **dadurch gekennzeichnet, daß** es sich bei den Überzugsmitteln um Pulverlacke handelt.

7. Verwendung nach einem der Ansprüche 1 bis 5, **dadurch gekennzeichnet, dass** das Überzugsmittel gegebenenfalls Vernetzer, Pigmente, Füllstoffe und/oder lackübliche Additive enthält.

8. Verwendung nach einem der Ansprüche 1 bis 6, **dadurch gekennzeichnet, dass** das Überzugsmittel in der Form einer Pulver-Slurry vorliegt.

9. Verfahren zur Herstellung eines Überzugsmittels, dass umfasst: die Herstellung von Homo- oder Copolymerisaten durch rodikalische Homo- oder Copolymerisation von wasserunlöslichen ethylenisch ungesättigten Monomeren gegebenenfalls zusammen mit wasserlöslichen Monomeren in wäßrigem Medium in Gegenwart von üblichen Polymerisationsinitiatoren bis zu einem zahlenmittleren Molekulargewicht von 1000 bis 1000000, wobei man entweder in Gegenwart von Cyclodextrin oder Cyclodextrinderivaten arbeitet und/oder zumindest die wasserunlöslichen Monomeren in der Form von Komplexen mit Cyclodextrin und/oder Cyclodextrinderivaten einsetzt, und die Verwendung der so hergestellten Bindemittel zur Herstellung des Überzugsmittels.

10. Verfahren nach Anspruch 9, **dadurch gekennzeichnet, dass** dem Überzugsmittel gegebenenfalts Vernetzer, Pigmente, Füllstoffe und/oder lackübliche Additive zugesetzt werden.

## Claims

1. Use of homo- or co-polymers which are obtained by free-radical homo- or co-polymerisation of water-insoluble ethylenically unsaturated monomers, optionally together with water-soluble monomers, in an aqueous medium, in the presence of conventional polymerisation initiators, to a number-average molecular weight of from 1000 to 1,000,000, the polymerisation being carried out in the presence of cyclodextrin or cyclodextrin derivatives and/or at least the water-insoluble monomers being used in the form of complexes with cyclodextrin and/or cyclodextrin derivatives, as binders for the preparation of coating compositions.

2. Use according to claim 1, wherein the water-insoluble monomers are selected from glycidyl-functionalised monomers, hydroxyalkyl esters of α,β-unsaturated carboxylic acids, reaction products of hydroxyethyl (meth)acrylate with caprolactone, and monomers having secondary OH functions.

3. Use according to either claim 1 or claim 2, **characterised in that** the homo- and/or co-polymers are obtained in the form of powders or aqueous powder suspensions.

4. Use according to any one of claims 1 to 3, **characterised in that** the resulting homo- or co-polymers are separated off and the aqueous phase that remains is fed back into the process again.

5. Use according to any one of claims 1 to 4, **characterised in that** the homo- or co-polymers that are prepared are incorporated directly into coating compositions as binders.

6. Use according to any one of claims 1 to 4, **characterised in that** the coating compositions are powder coatings.

7. Use according to any one of claims 1 to 5, **characterised in that** the coating composition optionally contains crosslinkers, pigments, fillers and/or additives conventional in lacquers.

8. Use according to any one of claims 1 to 6, **characterised in that** the coating composition is in the form of a powder slurry.

9. Process for the preparation of a coating composition, comprising: the preparation of homo- or co-polymers by free-radical homo- or co-polymerisation of water-insoluble ethylenically unsaturated monomers, optionally together with water-soluble monomers, in an aqueous medium, in the presence of conventional polymerisation initiators, to a number-average molecular weight of from 1000 to 1,000,000, the polymerisation being carried out in the presence of cyclodextrin or cyclodextrin derivatives and/or at least the water-insoluble monomers being used in the form of complexes with cyclodextrin and/or cyclodextrin derivatives, and the use of the binders so prepared in the preparation of the coating composition.

10. Process according to claim 9, **characterised in that** crosslinkers, pigments, fillers and/or additives conventional in lacquers are optionally added to the coating composition.

## Revendications

1. Utilisation d'homopolymères ou de copolymères, qui sont produits par homopolymérisation ou copolymérisation radicalaire de monomères à insaturation éthylénique insolubles dans l'eau, éventuellement conjointement avec des monomères solubles dans l'eau, dans un milieu aqueux en présence d'amorceurs de polymérisation usuels pouvant atteindre un poids moléculaire moyen en nombre compris entre 1 000 et 1 000 000, dans laquelle on travaille soit avec de la cyclodextrine, soit avec des dérivés de la cyclodextrine et/ou on utilise au moins les monomères insolubles dans l'eau sous la forme de complexes formés avec la cyclodextrine et/ou les dérivés de la cyclodextrine, à titre de liants pour la production d'agents de revêtement.

2. Utilisation selon la revendication 1, dans laquelle les monomères insolubles dans l'eau sont choisis parmi des monomères fonctionnalisés par des fonctions glycidyliques, des esters d'hydroxyalkyle, des acides carboxyliques α,β-insaturés, des produits de la réaction entre le (méth)acrylate d'hydroxyéthyle et la caprolactone et des monomères portant des fonctions OH secondaires.

3. Utilisation selon la revendication 1 ou 2, **caractérisée en ce que** les homopolymères et/ou copolymères sont obtenus sous la forme de poudres ou bien de suspensions aqueuses de poudres.

4. Utilisation selon l'une des revendications 1 à 3, **caractérisée en ce que** les homopolymères ou copolymères obtenus sont séparés et **en ce que** la phase aqueuse restante est réintroduite dans le procédé.

5. Utilisation selon l'une des revendications 1 à 4, **caractérisée en ce que** les homopolymères ou copolymères produits sont incorporés directement à titre de liants dans des agents de revêtement.

6. Utilisation selon l'une des revendications 1 à 4, **caractérisée en ce que** les agents de revêtement sont des peintures en poudre.

7. Utilisation selon l'une des revendications 1 à 5, **caractérisée en ce que** l'agent de revêtement contient éventuellement des agents de réticulation, des pigments, des charges et/ou des additifs usuels pour la peinture.

8. Utilisation selon l'une des revendications 1 à 6, **caractérisée en ce que** l'agent de revêtement se présente sous la forme d'une suspension de poudres.

9. Procédé de production d'un agent de revêtement comprenant : la production d'homopolymères ou de copolymères par homopolymérisation ou copolymérisation radicalaire de monomères à insaturation éthylénique insolubles dans l'eau, éventuellement conjointement avec des monomères solubles dans l'eau, dans un milieu aqueux en présence d'amorceurs de polymérisation usuels pouvant atteindre un poids moléculaire moyen en nombre compris entre 1 000 et 1 000 000, dans lequel on travaille soit avec de la cyclodextrine, soit avec des dérivés de la cyclodextrine et/ou on utilise au moins les monomères insolubles dans l'eau sous la forme de complexes formés avec la cyclodextrine et/ou les dérivés de la cyclodextrine, et l'utilisation du liant ainsi produit pour la production de l'agent de revêtement.

10. Procédé selon la revendication 9, **caractérisé en ce que** des agents de réticulation, des pigments, des charges et/ou des additifs usuels pour la peinture sont éventuellement ajoutés à l'agent de revêtement.
